# EUROPÄISCHE PATENTSCHRIFT

(11) **EP 0 475 017 B1**
(45) Veröffentlichungstag und Bekanntmachung des Hinweises auf die Patenterteilung: **17.05.1995**
(21) Anmeldenummer: 91111805.7
(22) Anmeldetag: 16.07.1991
(51) Int. Cl.: F16C 1/22

(54) **Einstellvorrichtung für Bowdenzüge**
Controlling cable adjusting device
Dispositif de réglage pour commande par câble

(30) Priorität: 11.08.1990 DE 4025529
(43) Veröffentlichungstag der Anmeldung: 18.03.1992
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Adams, Gerd, W-5653 Leichlingen 1 (DE); de Crouppe, Guido, W-5050 Frechen (DE)
(74) Vertreter: Messulam, Alec Moses

(56) Entgegenhaltungen:
- EP-A- 0 338 450
- EP-A- 0 431 307
- DE-A- 2 014 129

## Beschreibung

Die Erfindung bezieht sich auf eine Einstellvorrichtung für Bowdenzüge, der im Oberbegriff des Patentanspruches 1 erläuterten Art.

Aus der EP-A-0,338,450 ist eine Einstellvorrichtung für Bowdenzüge, mit einem ortsfesten Widerlager, an dem eine ein Hüllenendstück verschiebbar aber unverdrehbar aufnehmende Stützhülse anliegt, bekannt, die mit einer Sperrhülse mit einer inneren Sperrnase verbunden ist und wobei die Sperrnase durch relatives Verdrehen gegenüber der Stützhülse in Eingriff mit an dem Hüllenendstück ausgebildeten Zähnen kommt und hierdurch die wirksame Hüllenlänge festlegt.

Die bekannte Einstellvorrichtung weist den Nachteil auf, daß die mit der Stützhülse verbundene Sperrhülse nur in Druckrichtung gegen das ortsfeste Widerlager anliegt und dementsprechend bei auf die Bowdenzughülle einwirkender Zugbelastung vom Widerlager abheben kann. Darüber hinaus ist die Verbindung zwischen der Stützhülse und der Sperrhülse mittels einer mehrgängigen Windungsfeder verhältnismäßig aufwendig und unsicher.

Die Aufgabe der Erfindung ist es eine Einstellvorrichtung für Bowdenzüge, der im Oberbegriff des Patentanspruches 1 erläuterten Art derart zu verbessern, daß eine in Zug- und Druckrichtung sichere Verbindung zwischen dem ortsfesten Widerlager und der Stützhülse mit Sperrhülse als auch eine einfachere Verbindung zwischen der Stützhülse und der Sperrhülse geschaffen wird.

Gemäß der Erfindung wird diese Aufgabe gelöst, indem eine Einstellvorrichtung für Bowdenzüge, der im Oberbegriff des Patentanspruches 1 erläuterten Art, die im Kennzeichenteil des Patentanspruches 1 aufgezeigten Merkmale aufweist.

In den Ansprüchen 2 und 3 sind weitere Einzelheiten der Erfindung erläutert.

Dadurch, daß die Stützhülse über zwei sich axial erstreckende Arme axial- und drehfest mit dem Widerlager verbunden ist und die Sperrhülse als Ring in radialer Richtung in axiale Flucht mit der Stützhülse zwischen die Arme eingesprengt ist und über radial abstehende Nocken um einen bestimmten Winkel relativ zur Stützhülse verdrehbar ist, sind die am Innenumfang der Sperrhülse radial vorragenden Zähne in Eingriff mit den am Außenumfang des Hüllenendstückes angeordneten Zähnen bringbar und fixieren hierdurch die axiale Lage des Hüllenendstückes.

Dadurch, daß die Stützhülse von einer Betätigungshülse konzentrisch umfaßt wird, die mit sich axial erstreckenden Armen mit den radialen Nocken an der Sperrhülse axial und radial fest verrastet sind, kann eine einfachere und sichere Betätigung der Sperrhülse von Hand aus erfolgen.

Dadurch, daß an der Sperrhülse radiale Noppen mit Rasten in den Armen zwischen der Stützhülse und dem Widerlager verrastend zusammenwirken, wird für ein Verrasten der Sperrstellung gesorgt.

Die Erfindung wird anhand eines in den Zeichnungen gezeigten Ausführungsbeispieles näher erläutert. Es zeigt:
- Fig. 1: einen vertikalen Schnitt durch eine Einstellvorrichtung für Bowdenzüge nach der Erfindung im montierten Zustand;

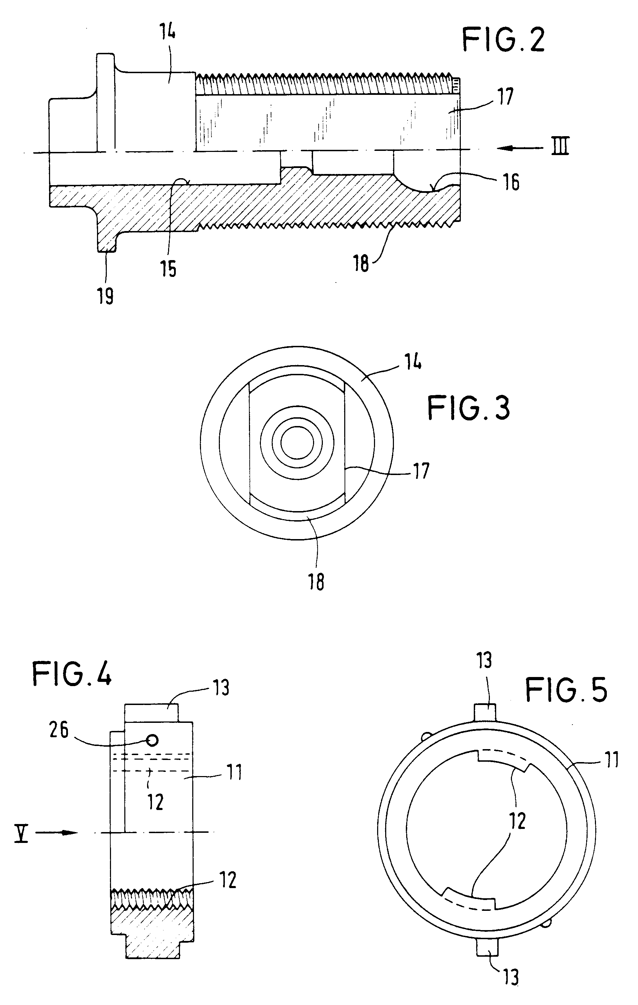

- Fig. 2: eine halbseitige Seitenansicht/Schnittansicht des Hüllenendstückes des Bowdenzuges;
- Fig. 3: eine Axialansicht in Richtung des Pfeiles III in Fig. 2;
- Fig. 4: eine halbseitige Seitenansicht/Schnittansicht der Sperrhülse;
- Fig. 5: eine Axialansicht der Sperrhülse in Richtung des Pfeiles V in Fig. 4;

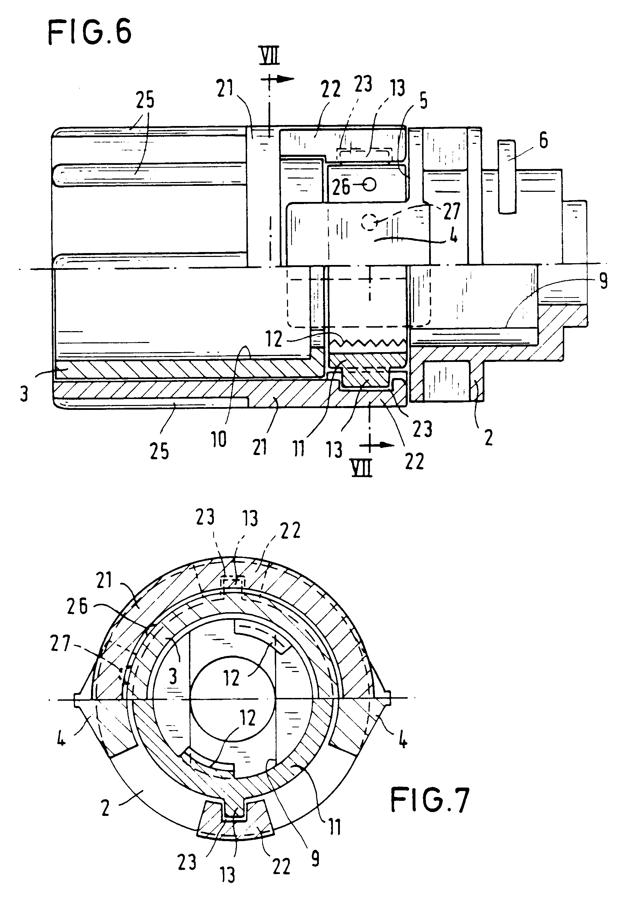

- Fig. 6: eine halbseitige Seitenansicht/Schnittansicht der Stützhülse mit eingesetzter Sperrhülse und aufgesetzter Betätigungshülse und
- Fig. 7: einen Schnitt entlang der Linie VII-VII in Fig. 6.

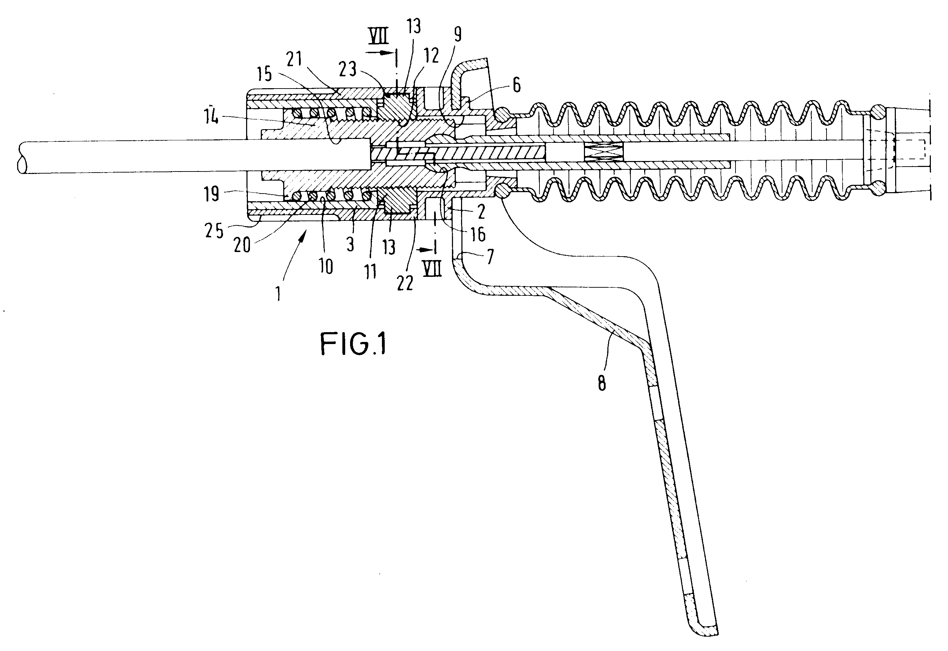

Aus Fig. 1 sind die Hauptbestandteile der Einstellvorrichtung für Bowdenzüge nach der Erfindung zu ersehen. Die Einstellvorrichtung 1 besteht aus einem Widerlagerteil 2 und einem Stützhülsenteil 3, die über sich axial erstreckende Arme 4 zu einem Bauteil verbunden sind und dementsprechend quer zu ihrer Achse eine verhältnismäßig weite Queröffnung 5 aufweisen.

Das Widerlager-Stützhülsenteil 2/3 ist in seinem Widerlagerteil 2 mit an sich bekannten Rasteinrichtungen 6 zur Verrastung mit einer Öffnung 7 in einer Haltekonsole 8 versehen und der Stützhülsenteil 3 weist in seinem vorderen Teil eine polygonale Öffnung 9 und in seinem hinteren Teil eine dazu konzentrische Öffnung 10 auf.

Eine Sperrhülse 11 in Form eines Ringes wird unter elastischer Verformung in radialer Richtung durch die Queröffnung 5 in axiale Flucht mit dem Widerlager-Stützhülsenteil 2/3 eingesprengt und weist in Teilbereichen seines Innenumfanges nach innen vorspringende Zähne 12 und an seinem Außenumfang radial abstehende Nocken 13 auf.

Ein an der Bowdenzughülle angeordnetes Hüllenendstück 14 weist innere Aufnahmeöffnungen 15 und 16 für die Bowdenzughülle bzw. die Bowdenzugseele auf und ist an ihrem Außenumfang als Polygonprofil mit abgeflachten Seiten 17 und bogenförmigen Sperrzähnen 18 ausgebildet. Zwischen einem Flansch 19, der in die konzentrische Öffnung 10 im Widerlager-Stützhülsenteil 2/3 verschiebbar hineinpaßt, kann falls erwünscht, eine Vorspannfeder 20 angeordnet werden. Die bisher beschriebene Einstellvorrichtung ist bereits funktionsfähig sofern berücksichtigt wird, daß die radial abstehenden Nocken 13 an der Sperrhülse 11 ausreichend groß dimensioniert sind, so daß die in der Queröffnung 5 vorragenden Nocken 13 von Hand aus zum Verdrehen der Sperrhülse 11 erfaßt werden können.

Nach einem weiteren Ausführungsbeispiel der Erfindung ist jedoch konzentrisch zur Stützhülse 3 eine Betätigungshülse 21 angeordnet, die mit sich axial erstreckenden Armen 22 die Queröffnung 5 im Widerlager-Stützhülsenteil 2/3 übergreift und mit Rastausnehmungen 23 die radial abstehenden Nocken 13 an der Sperrhülse 11 axial und radial fest verrastet aufnehmen. Durch Erfassen des Außenumfanges der Betätigungshülse 21 die eine griffgünstige Riffelung 25 aufweisen kann, kann die Sperrhülse 11 innerhalb der Queröffnung 5 einfacher und sicherer relativ zur Widerlager-Stützhülse 2/3 verdreht werden.

Bei der Montage der Bowdenzughülle in der Einstellvorrichtung wird zunächst die Einstellvorrichtung 1 über die Haltevorrichtungen 6 in die Öffnung 7 der Haltekonsole 8 eingerastet, daraufhin wird das Hüllenendstück 14 in axialer Richtung in den Widerlager-Stützhülsenteil 2/3 eingeschoben, wobei sich die Sperrhülse 11 in ihrer Ausgangslage befindet, in der sie mit ihren inneren Zähnen 12 seitlich vom abgeflachten Bereich 17 am Hüllenendstück liegt. Ist das Hüllenendstück entsprechend weit durch die Sperrhülse 11 hindurchgeschoben, so wird durch Betätigen der radialen Nocken 13 bzw. der Betätigungshülse 21 die Sperrhülse 11 relativ zum Widerlager-Stützhülsenteil 2/3 verdreht und die inneren Zähne 12 können hierdurch in Eingriff mit den äusseren Zähnen 18 am Hüllenendstück 14 gelangen. Dadurch ist die axiale Festlegung der Bowdenzughülle sicher erreicht.

Nach einer weiteren Ausführungsform können am Außenumfang der Sperrhülse 11 benachbart den radialen Nocken 13 kleine Rastvorsprünge 26 vorgesehen werden, die mit entsprechenden Rastausnehmungen 27 in den sich radial erstreckenden Armen 4 zwischen dem Widerlagerteil 2 und dem Stützhülsenteil 3 zusammenwirken um die Sperrlage der Sperrhülse 11 zu arretieren.

## Patentansprüche

1. Einstellvorrichtung für Bowdenzüge, mit einem ortsfesten Widerlager, an dem eine ein Hüllenendstück in einem Polygonprofil verschiebbar aber unverdrehbar aufnehmende Stützhülse anliegt, die mit einer Sperrhülse mit einer inneren Sperrvorrichtung verbunden ist und wobei die Sperrvorrichtung durch relatives Verdrehen gegenüber der Stützhülse in Eingriff mit am Außenumfang des Hülsenendstückes ausgebildeten Zähnen bringbar und hierdurch die wirksame Hüllenlänge festlegbar ist,
**dadurch gekennzeichnet**, daß
- das Widerlager (2) und die Stützhülse (3) über zwei sich axial erstreckende Arme (4) axial und drehfest eine freie Queröffnung (5) bildend verbunden sind
- die Sperrhülse (11) als Ring unter elastischer Verformung in radialer Richtung durch die Queröffnung (5) in axiale Flucht mit dem Widerlager-Stützhülsenteil (2/3) eingesprengt ist und am Innenumfang in Teilbereichen Sperrzähne (12) als Sperrvorrichtung und am Außenumfang radial abstehende Nocken (13) aufweist und in der Queröffnung (5) relativ zum Widerlager-Stützhülsenteil (2/3) verdrehbar ist, derart
- daß die am Innenumfang der Sperrhülse (11) radial vorragenden Zähne (12) in Eingriff mit den am Außenumfang des Hüllenendstückes (14) angeordneten Zähnen (18) bringbar sind.

2. Einstellvorrichtung nach Anspruch 1,
**dadurch gekennzeichnet**, daß
- das Widerlager-Stützhülsenteil (2/3) konzentrisch von einer Betätigungshülse (21) umfaßt ist, die mit sich axial erstreckenden Armen (22) versehen ist, die die Sperrhülse(11) übergreifen und die die radial abstehenden Nocken (13) in Ausnehmungen (23) axial und radial fest verrastet aufnehmen.

3. Einstellvorrichtung nach den Ansprüchen 1 und 2
**dadurch gekennzeichnet**, daß
an der Sperrhülse (11) benachbart den radialen Nocken (13) Rastvorsprünge (26) vorgesehen sind, die mit Rastausnehmungen (27) in den beiden Armen (4) zwischen dem Widerlagerteil (2) und dem Stützhülsenteil (3) die Sperrstellung sichernd zusammenwirken.

## Claims

1. Adjusting device for Bowden cables with a stationary abutment on which there rests a supporting sleeve which slidably but non-rotatably receives a sheath end piece in a polygonal profile and is connected to a locking sleeve with an internal locking device and wherein the locking device can be caused, by relative rotation with respect to the supporting sleeve, to mesh with teeth constructed on the external periphery of the sleeve end piece and the effective sheath length can thus be fixed, characterised in that the abutment (2) and the supporting sleeve (3) are connected axially and non-rotatably via two axially extending arms (4) to form a free transverse opening (5), the locking sleeve (11) is inserted as a ring with elastic deformation in a radial direction through the transverse opening (5) in axial alignment with the abutment/supporting sleeve part (2/3) and has locking teeth (12) over portions of the internal periphery as locking device and radially projecting cogs (13) on the external periphery and is rotatable in the transverse opening (5) relative to the abutment/supporting sleeve part (2/3) such that the teeth (12) protruding radially on the internal periphery of the locking sleeve (11) can be caused to mesh with the teeth (18) arranged on the external periphery of the sheath end piece (14).

2. Adjusting device according to claim 1, characterised in that the abutment/supporting sleeve part (2/3) is surrounded concentrically by an actuating sleeve (21) provided with axially extending arms (22) which overlap the locking sleeve (11) and receive the radially projecting cogs (13) in an axially and radially securely engaged manner in recesses (23).

3. Adjusting device according to claims 1 and 2, characterised in that there are provided on the locking sleeve (11), adjacent to the radial cogs (13), catch projections (26) which co-operate, so as to secure the locked position, with catch recesses (27) in the two arms (4) between the abutment part (2) and the supporting sleeve part (3).

## Revendications

1. Dispositif de réglage pour câbles Bowden, comprenant une butée fixe contre laquelle est appliquée une douille d'appui recevant une extrémité de gaine pouvant être déplacée dans un profilé polygonal mais ne pouvant pas tourner, douille d'appui qui est reliée à une douille de blocage contenant un dispositif de blocage intérieur, le dispositif de blocage pouvant être mis en prise avec des dents réalisées sur le pourtour extérieur de l'extrémité de gaine en le faisant tourner par rapport à la douille d'appui, et la longueur effective de la gaine pouvant ainsi être fixée, caractérisé en ce que la butée (2) et la douille d'appui (3) sont reliées entre elles dans la direction de l'axe et de façon fixe en rotation par le biais de deux bras (4) s'étendant axialement en formant une ouverture transversale libre (5), en ce que la douille de blocage (11) est enfoncée en tant que bague dans la direction radiale dans l'ouverture transversale (5) avec une déformation élastique en étant en alignement axial avec la partie composée de la butée et de la douille d'appui (2/3), présente sur certaines parties du pourtour extérieur des dents de blocage (12) servant de dispositif de blocage et sur le pourtour extérieur, des ergots (13) faisant saillie radialement et peut tourner par rapport à la partie composée de la butée et de la douille d'appui (2/3) dans l'ouverture transversale (5), et ce, de telle manière que les dents (12) faisant saillie radialement sur le pourtour intérieur de la douille de blocage (11) puissent être mises en prise avec les dents (18) disposées sur le pourtour extérieur de l'extrémité de gaine (14).

2. Dispositif de réglage selon la revendication 1, caractérisé en ce que la partie composée de la butée et de la douille d'appui (2/3) est entourée de façon concentrique par une douille d'actionnement (21) qui est munie de bras s'étendant dans la direction de l'axe (22) qui passent par-dessus la douille de blocage (11) et qui reçoivent dans des évidements (23) les ergots faisant saillie radialement (13) de façon à ce qu'ils soient enclenchés fixement dans les directions axiale et radiale.

3. Dispositif de réglage selon les revendications 1 et 2, caractérisé en ce que sur la douille de blocage (11), au voisinage des ergots radiaux (13) sont prévus des saillies d'enclenchement (26) qui coopèrent avec des crans (27) réalisés dans les deux bras (4), entre la butée (2) et la douille d'appui (3), de façon à assurer la position de blocage.
